# EUROPEAN PATENT APPLICATION

(11) **EP 2 208 876 A2**
(43) Date of publication of application: **21.07.2010**
(21) Application number: 10150686.3
(22) Date of filing: 13.01.2010
(51) Int. Cl.: F02C 1/00, F02C 1/08, F02C 3/22

(54) **Methods for increasing carbon dioxide content in gas turbine exhaust and systems for achieving the same**

(30) Priority: 16.01.2009 US 355246
(71) Applicant: General Electric Company, Schenectady, NY 12345 (US)
(72) Inventor: Draper, Samuel David, Simpsonville, SC 29681 (US)
(74) Representative: Gray, Thomas

(57) **Abstract**

Disclosed herein is a system 1000 comprising a first compressor (810); the first compressor (810) being operative to compress air; a turbine (420); the turbine (420) being disposed downstream of the first compressor (810); the turbine (420) being operative to combust a hydrocarbon fuel along with compressed air from the first compressor (810) to produce an exhaust gas stream; and a second compressor (410); the second compressor (410) being disposed downstream of the turbine (420); the second compressor (410) being operative to compress the exhaust gas stream and to recycle the compressed exhaust gas stream to the turbine (420). Disclosed herein is a method comprising compressing air in a first compressor (810); combusting the air along with a hydrocarbon fuel in a turbine (420); generating an exhaust gas stream from the turbine (420); compressing the exhaust gas stream in a second compressor (410); recirculating the compressed exhaust gas stream to the turbine (420); separating carbon dioxide from the exhaust gas stream; and storing the carbon dioxide.

## Description

### BACKGROUND OF THE INVENTION

This disclosure relates to methods for increasing the carbon dioxide (CO₂) content in gas turbine exhaust gas streams and systems for achieving the same.

Environmental pollution stemming from fossil-fueled power plants is of worldwide concern. Power plants emit air pollutants that may be toxic, e. g., toxic metals and polyaromatic hydrocarbons; precursors to acid rain, e.g., sulfur oxides (SOₓ) such as sulfur dioxide (SO₂) and nitrogen oxides (NOₓ); precursors to ozone such as for example, NO₂ and reactive organic gases; particulate matter; and greenhouse gases, notably CO₂. Power plants also discharge potentially harmful effluents into surface and ground water, and generate considerable amounts of solid wastes, some of which may be hazardous.

Natural gas fired gas turbine combined cycle (NGCC) power plants emit lower quantities of CO₂ per megawatt hour than pulverized coal fired power plants. This is due to the lower percentage of carbon in the fuel, and also due to higher efficiencies attainable in combined cycle power plants. As a result, the concentration of CO₂ in the exhaust gas of an NGCC plant can be about 4 volume percent, while in a coal fired plant it can be 12 volume percent, based on the total volume of the exhaust gas stream. The lower concentration of CO₂ leads to a higher concentration of oxygen relative to the amount of CO₂. The low concentration of CO₂ in the exhaust gas stream and the corresponding increased concentration of oxygen lead to challenges for CO₂ capture systems employed in NGCC plants.

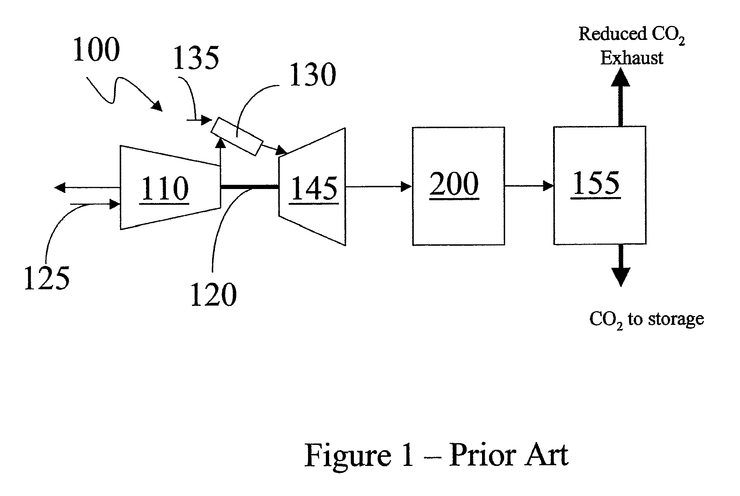

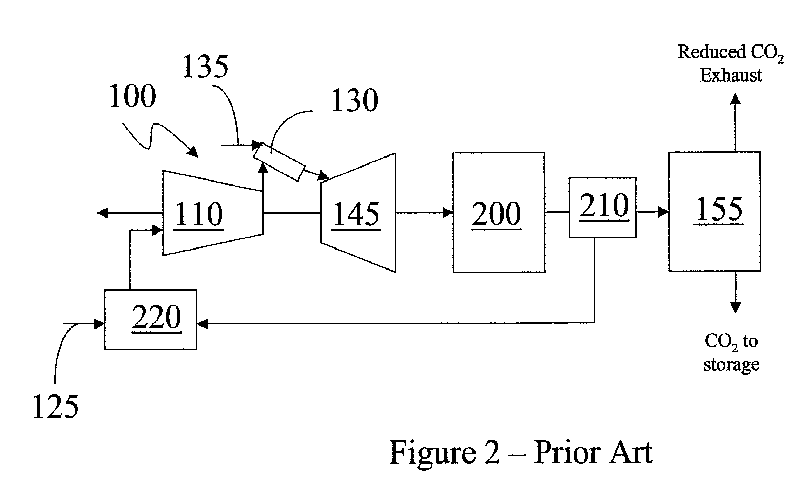

Figures 1 and 2 are schematic diagrams that represent currently existing commercial NGCC plants. Figure 1 is a schematic depiction of an NGCC plant that does not recirculate the exhaust gases. In the Figure 1, the turbomachinary 100 comprises a compressor 110 having a shaft 120. Air enters the inlet of the compressor at 125, is compressed by the compressor 110, and then discharged to a combustion system 130, where a fuel 135 such as, for example, natural gas is burned to provide high-energy combustion gases which drive the turbine 145. In the turbine 145, the energy of the combustion gases is converted into work, some of which is used to drive the compressor 110 via the shaft 120, with the remainder being available for useful work to drive a load (not illustrated).

The exhaust gases are then discharged from the turbine 145 to a heat recovery steam generator 200 that is located downstream of the turbine 145. The exhaust gases are then discharged to a carbon dioxide separation system 155 where carbon dioxide is separated from the exhaust gas stream. The carbon dioxide separated from the exhaust gas stream is sequestered and stored while the remainder of the exhaust gas stream is discharged to the atmosphere.

Figure 2 is a depiction of an NGCC plant that recirculates the exhaust gases. The plant in the Figure 2 is similar to that in Figure 1 except for the presence of a flow divider 210 and an air mixer 220. The flow divider 210 is disposed downstream of the heat recovery steam generator 200 and upstream of the carbon dioxide separation system 155. The flow divider 210 functions to separate some of the exhaust gas from the exhaust gas stream and to discharge it to the air mixer 110. The air mixer 220 is disposed downstream of the flow divider 210 and receives the recirculated exhaust gases which it combines with additional air to form an air-exhaust gas mixture. The air-exhaust gas mixture is then fed to the compressor 110.

CO₂ capture systems face a plurality of challenges when operated in high oxygen and therefore low CO₂ concentration exhaust gas streams. The low concentration of CO₂ causes the use of large and expensive equipment to be used to handle the volume of exhaust gases. In addition, the low CO₂ concentration decreases the thermal efficiency of the CO₂ separation.

The high oxygen concentration will cause damage to CO₂ capture systems that happen to be sensitive to oxidation. For example, amine-scrubbing systems are employed to facilitate the separation of CO₂ from the exhaust gas stream. The amine solvents in the amine-scrubbing system begins to degrade in the presence of oxygen that is contained in the exhaust gas stream. This leads to a reduction in efficiency as a result of downtime to facilitate maintenance of the amine scrubbing system. This increases the operating cost of the plant.

Additionally, the high oxygen concentration will enable large amounts of oxygen to pass through the CO₂ separation systems. Oxygen is very damaging to sequestration systems, and cannot be allowed in any appreciable concentration in the CO₂ stream that is being sequestered.

In view of the detrimental nature of oxygen, it is desirable to reduce the amount of oxygen in the exhaust gas stream from an NGCC plant and to increase the amount of CO₂ present in the exhaust gas stream to about 10 to about 14 volume percent, based on the total volume of the exhaust gas stream.

### BRIEF DESCRIPTION OF THE INVENTION

Disclosed herein is a system comprising a first compressor; the compressor being operative to compress air; a turbine; the turbine being disposed downstream of the first compressor; the turbine being operative to combust a hydrocarbon fuel along with compressed air from the first compressor to produce an exhaust gas stream; and a second compressor; the second compressor being disposed downstream of the turbine; the second compressor being operative to compress the exhaust gas stream and to recycle the compressed exhaust gas stream to the turbine.

Disclosed herein is a method comprising compressing air in a first compressor; combusting the air along with a hydrocarbon fuel in a turbine; generating an exhaust gas stream from the turbine; compressing the exhaust gas stream in a second compressor; recirculating the compressed exhaust gas stream to the turbine; separating carbon dioxide from the exhaust gas stream; and storing the carbon dioxide.

### BRIEF DESCRIPTION OF THE DRAWINGS

There follows a detailed description of embodiments of the invention by way of example only with reference to the accompanying drawings, in which:
Figure 1 is a schematic diagram illustrating an exemplary prior art system for reducing CO₂ emissions;
Figure 2 is another schematic diagram illustrating an exemplary prior art system for reducing CO₂ emissions; and
Figure 3 is another schematic diagram that illustrates a method for reducing the carbon dioxide in the exhaust gas stream while simultaneously reducing the oxygen in the exhaust gas stream.

### DETAILED DESCRIPTION OF THE INVENTION

The following detailed description of preferred embodiments refers to accompanying drawings, which illustrate specific embodiments. Other embodiments having different structures and operations do not depart from the scope of the subject matter disclosed herein.

Certain terminology is used herein for the convenience of the reader only and is not to be taken as a limitation on the scope of the invention. For example, words such as "upper," "lower," "left," "right," "front", "rear" "top", "bottom", "horizontal," "vertical," "upstream," "downstream," "fore", "aft", and the like; merely describe the configuration shown in the Figures. Indeed, the element or elements of an embodiment of the subject matter disclosed herein may be oriented in any direction and the terminology, therefore, should be understood as encompassing such variations unless specified otherwise.

It is to be noted that as used herein, the terms "first," "second," and the like do not denote any order or importance, but rather are used to distinguish one element from another, and the terms "the", "a" and "an" do not denote a limitation of quantity, but rather denote the presence of a of the referenced item. Furthermore, all ranges disclosed herein are inclusive of the endpoints and independently combinable. The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Furthermore, in describing the arrangement of components in embodiments of the present disclosure, the terms "upstream" and "downstream" are used. These terms have their ordinary meaning. For example, an "upstream" device as used herein refers to a device producing a fluid output stream that is fed to a "downstream" device. Moreover, the "downstream" device is the device receiving the output from the "upstream" device. However, it will be apparent to those skilled in art that a device may be both "upstream" and "downstream" of the same device in certain configurations, e.g., a system comprising a recycle loop.

Disclosed herein is a method for reducing the oxygen content in an exhaust gas stream produced by a gas turbine. The method involves exhaust gas recirculation combined with post-combustion carbon dioxide capture. Disclosed herein too is a gas turbine system that advantageously comprises an "exhaust gas recirculation system" with a post-combustion carbon dioxide separation and storage system that is capable of reducing the oxygen content in the exhaust gas stream of a gas turbine to less than or equal to about 12 volume percent, specifically less than or equal to about 10 volume percent, specifically less than or equal to about 5 volume percent, specifically less than or equal to about 2 volume percent, and more specifically less than or equal to about 1 volume percent, based on the total volume of the exhaust gas stream.

By continually recirculating the exhaust gas stream back to turbomachinery from which it was generated, the amount of oxygen in the feed stream to the turbine is reduced to a low steady-state value. This reduction in oxygen content occurs in each sequential pass of the exhaust gas stream through the turbomachinery. A carbon dioxide detector continually monitors the carbon dioxide content in the exhaust gas stream. When the amount of carbon dioxide in the exhaust gas stream is about 10 to about 14 volume percent, based on the total volume of the exhaust gas stream, the carbon dioxide can be separated and captured from the exhaust gas stream by the carbon dioxide separation system. Following separation, the carbon dioxide is subjected to sequestration.

During the capture process, the carbon dioxide is separated from the flue gas, resulting in 2 streams leaving the carbon dioxide separation system. The first stream comprises exhaust gas with a lower CO₂ concentration than that which would have entered the carbon dioxide separation system were it not for the recycling of the exhaust gas stream. The concentration of CO₂ in the exhaust gas stream is thus reduced by 50 to 95 mole percent, based on the total number of moles in the original exhaust gas stream emitted by the gas turbine. The first stream of the exhaust gas stream is emitted to the atmosphere. The second stream comprises the separated CO₂, with the highest possible concentration of CO₂ and it is generally desirable for this concentration of CO₂ to be greater than or equal to about 95 mole percent CO₂, specifically greater than or equal to about 97 mole percent CO₂, and more specifically greater than or equal to about 98 mole percent CO₂, based on the total number of moles in the second stream. The second stream is stored in some manner that does not include venting it to the atmosphere. It is generally stored underground in a mine-shaft or an underground geological formation.

Exhaust gas recirculation to reduce the amount of oxygen in the exhaust gas stream has a number of advantages. By reducing the amount of oxygen to less than or equal to about 5 volume percent, specifically less than or equal to about 2 volume percent of the volume of the exhaust gas stream, the degradation of amine solvents (by oxidation) that are used in the separation of carbon dioxide from oxygen is greatly reduced. In addition, reducing the level of oxygen to less than or equal to about 2 volume percent in the exhaust gas stream makes possible the use of membranes and ionic liquids for effecting carbon dioxide separation. Other advantages will be detailed later.

Exhaust gas recirculation generally involves recirculating a portion of the emitted exhaust through an inlet portion of the gas turbine. The exhaust is then mixed with the incoming airflow prior to combustion. The exhaust gas recirculation process facilitates the removal and sequestration of concentrated CO₂, and may also be used to reduce the NOₓ and SOₓ emission levels.

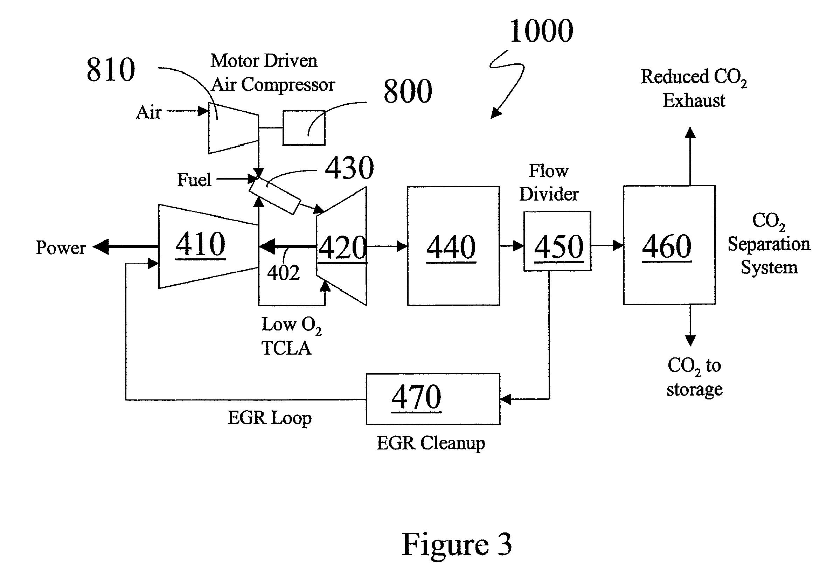

With reference now to the Figure 3, a system 1000 for recycling exhaust gas (by increasing the carbon dioxide content while reducing oxygen) comprises a first compressor 810 and a combustion system 430. A motor 800 is in communication with the first compressor 810 and drives the compressor 810. The combustion system 430 provides a means for combusting a mixture of fuel and compressed air and discharging it to a second compressor 410 where it is mixed with recycled exhaust gas and used to drive a turbine 420.

In one embodiment, the system comprises a combustion system 430 in which a mixture of fuel and compressed air is combusted, a second compressor 410 in which recycled exhaust gas and optional inlet air can be combusted, a turbine 420 that converts the energy of the combusted gases into work, an optional heat recovery steam generator 440, a flow divider 450, an exhaust gas purification system 470 and a carbon dioxide separation system 460. The first compressor 810 and the combustion system 430 lie upstream of the turbine 420.

As can be seen in the Figure 3, the turbine 420, the optional heat recovery steam generator 440, the exhaust gas recirculation system 150 and the carbon dioxide separation system 450 are in fluid communication with one another. The heat recovery steam generator 440 is located downstream of the turbine 420, while the flow divider 450, the carbon dioxide separator 460 and the exhaust gas purification system 470 are located downstream of the heat recovery steam generator 440.

In one embodiment, in one method of operating the system 1000, air is compressed in the first compressor 800 and combusted with fuel in the combustion system 430. The pressurized combusted gases are discharged to the turbine 420 and drive the turbine. Hydrocarbon fuels such as gasoline, diesel, natural gas, or the like, can be used in the combustion. An exemplary fuel is natural gas. In the turbine 420, the energy of the pressurized combusted gases is converted into work, some of which are used to drive the second compressor 410 through the shaft 402, with the remainder being available for useful work to drive a load (not illustrated).

Combustion of the hydrocarbon fuel in the turbine 420 generates an exhaust gas stream. The exhaust gas stream comprises a first amount of carbon dioxide and a first amount of oxygen. The exhaust gas stream is discharged to the heat recovery steam generator 440. After the extraction of heat from the exhaust gas stream in the heat recovery steam generator 440, the exhaust gas stream is discharged to the flow divider 450, where a first portion of the exhaust gas stream is directed to the carbon dioxide separator 460 while a second portion of the exhaust gas stream is recirculated. The exhaust gas stream (i.e., the second portion) that is recirculated will hereinafter be termed the "recirculated exhaust gas stream".

The air that is directed to the carbon dioxide separator is split into two streams as explained above. One stream (the second stream) is rich in carbon dioxide and is discharged to a sequestration system, while the other stream (the first stream) contains mostly exhaust gases with very little carbon dioxide and is exhausted to the atmosphere. The second stream generally comprises an amount of greater than or equal to about 90 volume percent, specifically greater than or equal to about 95 volume percent, and more specifically greater than or equal to about 98 volume percent of carbon dioxide, based on the total volume of the second stream.

The recirculated exhaust gas stream is filtered and purified in the exhaust gas purifier 470 following which it is discharged to the second compressor 410 where it is compressed and discharged to the combustion system 430 to be mixed with additional compressed air and fuel and combusted. The volume ratio of air to the exhaust gas stream supplied to the combustion system 430 can be up to about 0.05:1, specifically up to about 0.1:1, and more specifically up to about 0.25:1. A small amount of recycled exhaust gas containing a low amount of oxygen is supplied to the turbine in the form of cooling and leakage air (TCLA).

As noted above, the flow divider 450 divides the exhaust gas stream into a first portion and a second portion. The first portion is about 40 to about 80 volume percent, specifically about 45 to about 65 volume percent, and more specifically about 50 to about 60 volume percent, based on the total volume of the exhaust stream that enters the flow divider 450. The second portion is about 20 to about 60 volume percent, specifically about 35 to about 55 volume percent, and more specifically about 40 to about 50 volume percent, based on the total volume of the exhaust stream that enters the flow divider 450. With an advanced combustor design, oxygen levels leaving the combustion system 430 can reach below 2 volume percent, based on the total volume of the exhaust stream leaving the turbine 420. The combination of exhaust gas recirculation along with an advanced combustor design will allow the second portion to be about 60 volume percent to about 80 volume percent, based on the total volume of the exhaust stream that enters the flow divider 450.

The exhaust gas stream after undergoing filtration in the exhaust gas purifier 470 is recirculated to the turbine in a first pass. The exhaust gas stream undergoes further combustion during the first pass in the turbine to generate an exhaust gas stream that is itself recycled to the turbine for a second pass through the turbine. The exhaust gas stream that undergoes the second pass comprises a second amount of carbon dioxide and a second amount of oxygen.

Because of the combustion of the first amount of oxygen contained in the exhaust gas stream, the volume ratio of the first amount of oxygen in exhaust gas stream during the first pass is generally greater than the volume ratio of the second amount of oxygen to the exhaust gas stream during the second pass. The volume ratio of the first amount of carbon dioxide in the exhaust gas stream during the first pass through the turbine however, is smaller than the volume ratio of the second amount of carbon dioxide to the exhaust gas stream during the second pass through the turbine. This is because of the combustion of oxygen to form carbon dioxide. Thus by repeatedly recirculating the exhaust gas stream through the turbine, the oxygen content in the exhaust gas stream is gradually reduced, while the carbon dioxide content is increased. It is to be noted that the volume of carbon dioxide is increased from about 3 volume percent to about 18 volume percent, specifically about 4 to about 16 volume percent and more specifically about 5 to about 14 volume percent, based on the total volume of the recirculated exhaust gas stream, because of recirculating. When the exhaust gas stream comprises carbon dioxide in an amount of about 10 to about 14 volume percent of the total volume of the exhaust gas stream, the exhaust gas stream has reached a steady state.

During the recirculation of the exhaust gas stream, the amount of oxygen present in the recirculated exhaust gas stream is sequentially reduced during each pass through the turbine 420. As the oxygen present in the inlet air to the turbine is reduced because of recirculation, the proportion of oxygen in the exhaust gas stream is reduced relative to the amount of carbon dioxide present in the exhaust gas stream. During successive passes of the exhaust gas stream through the turbomachinary, the proportion of oxygen in the exhaust gas stream is reduced, while the proportion of carbon dioxide is increased.

The exhaust gas recirculation system disclosed herein may be applied to a variety of turbomachines that produce a gaseous fluid, such as a heavy duty gas turbine; an aero-derivative gas turbine; or the like (hereinafter referred to as "gas turbine"). It may be applied to either a single gas turbine or to a plurality of gas turbines. It may also be applied to a gas turbine operating in a simple cycle or in a combined cycle configuration.

Exhaust gas recirculation to reduce the amount of oxygen in the exhaust gas stream has a number of advantages. It is inexpensive because it does not necessitate the use of additional equipment. It reduces the amount of down time for repairs and maintenance. By reducing the amount of oxygen to less than or equal to about 2 volume percent, specifically less than or equal to about 1 volume percent, based on the volume of the recirculated exhaust gas stream, the degradation of amine solvents (by oxidation) that are used in the separation of carbon dioxide from oxygen is greatly reduced.

For completeness, various aspects of the invention are now set out in the following numbered clauses:
1. A method comprising:
   compressing air in a first compressor;
   combusting the air along with a hydrocarbon fuel in a turbine;
   generating an exhaust gas stream from the turbine;
   separating the exhaust gas stream into a first portion and a second portion;
   separating carbon dioxide from the first portion;
   compressing the second portion in a second compressor; and
   recirculating the compressed second portion to the turbine.
2. The method of clause 1, wherein an amount of carbon dioxide in the exhaust gas stream is increased from about 3 to about 18 volume percent of the total volume of the exhaust gas stream from the turbine.
3. The method of clause 1, wherein an amount of carbon dioxide in the exhaust gas stream is increased from about 5 to about 14 volume percent of the total volume of the exhaust gas stream from the turbine.
4. The method of clause 1, wherein the ratio of air to the exhaust gas stream supplied to the turbine is up to about 0.25:1.
5. The method of clause 1, wherein an oxygen content in the exhaust gas stream is less than or equal to about 12 volume percent, based on the total volume of the exhaust gas stream from the turbine.
6. The method of clause 1, wherein an oxygen content in the exhaust gas stream is less than or equal to about 2 volume percent, based on the total volume of the exhaust gas stream from the turbine.
7. The method of clause 5, wherein the first portion is about 40 to about 80 volume percent while the second portion is about 20 to about 60 volume percent, based on the total volume of the exhaust gas stream from the turbine.
8. The method of clause 5, wherein the first portion is about 45 to about 65 volume percent while the second portion is about 35 to about 55 volume percent, based on the total volume of the exhaust gas stream from the turbine.
9. The method of clause 1, further comprising storing the carbon dioxide in a tank.
10. The method of clause 1, further comprising storing the carbon dioxide in an underground geologic formation.
11. A system that uses the method of clause 1.
12. A system comprising:
   a first compressor; the compressor being operative to compress air;
   a turbine; the turbine being disposed downstream of the first compressor; the turbine being operative to combust a hydrocarbon fuel along with compressed air from the first compressor to produce an exhaust gas stream; and
   a second compressor; the second compressor being disposed downstream of the turbine; the second compressor being operative to compress the exhaust gas stream and to recycle the compressed exhaust gas stream to the turbine.
13. The system of clause 12, further comprising a combustion system; the combustion system being operative to combust the compressed air and the hydrocarbon fuel.
14. The system of clause 13, further comprising a carbon dioxide separation system; the carbon dioxide separation system being effect to extract carbon dioxide from the exhaust stream.
15. The system of clause 12, further comprising a flow divider; the flow divider being operative to divide the exhaust gas stream into a first portion and a second portion; the first portion being discharged to a carbon dioxide separator while the second portion is recirculated to the second compressor.
16. The system of clause 12, wherein the system is operative to facilitate recycling of the exhaust gas stream till an amount of oxygen is reduced to less than or equal to about 2 volume percent, based on the volume of the exhaust gas stream.
17. A system comprising:
   a first compressor; the compressor being operative to compress air;
   a combustion system; the combustion system being downstream of the first compressor;
   a turbine; the turbine being disposed downstream of the first compressor; the turbine being operative to combust a hydrocarbon fuel along with compressed air from the first compressor to produce an exhaust gas stream; and
   a second compressor; the second compressor being disposed downstream of the turbine; the second compressor being operative to compress the exhaust gas stream and to recycle the compressed exhaust gas stream to the turbine; the system providing a means to facilitate recycling of the exhaust gas stream till an amount of oxygen is reduced to less than or equal to about 12 volume percent, based on the volume of the exhaust gas stream.
18. The system of clause 17, further comprising a carbon dioxide separation system; the carbon dioxide separation system being effective to extract carbon dioxide from the exhaust stream.
19. The system of clause 17, further comprising a flow divider; the flow divider being operative to divide the exhaust gas stream into a first portion and a second portion; the first portion being discharged to a carbon dioxide separator while the second portion is recirculated to the second compressor.
20. The system of clause 19, further comprising a sequestration system where carbon dioxide is sequestered.

## Claims

1. A method comprising:
compressing air in a first compressor (810);
combusting the air along with a hydrocarbon fuel in a turbine (420);
generating an exhaust gas stream from the turbine (420);
separating the exhaust gas stream into a first portion and a second portion;
separating carbon dioxide from the first portion;
compressing the second portion in a second compressor (410); and
recirculating the compressed second portion to the turbine (420).

2. The method of claim 1, wherein an amount of carbon dioxide in the exhaust gas stream is increased from about 3 to about 18 volume percent of the total volume of the exhaust gas stream from the turbine (420).

3. The method of claim 1, wherein an amount of carbon dioxide in the exhaust gas stream is increased from about 5 to about 14 volume percent of the total volume of the exhaust gas stream from the turbine.

4. The method of any of the preceding claims, wherein a ratio of air to he exhaust gas stream supplied to the turbine (420) is up to about 0.25:1.

5. The method of any of the preceding claims, wherein an oxygen content in the exhaust gas stream is less than or equal to about 12 volume percent, based on the total volume of the exhaust gas stream from the turbine (420).

6. The method of any of the preceding claims, wherein an oxygen content in the exhaust gas stream is less than or equal to about 2 volume percent, based on the total volume of the exhaust gas stream from the turbine.

7. The method of any of the preceding claims" wherein the first portion is about 40 to about 80 volume percent while the second portion is about 20 to about 60 volume percent, based on the total volume of the exhaust gas stream from the turbine (420).

8. The method of any of the preceding claims, wherein the first portion is about 45 to about 65 volume percent while the second portion is about 35 to about 55 volume percent, based on the total volume of the exhaust gas stream from the turbine.

9. The method of any of the preceding claims, further comprising storing the carbon dioxide in a tank.

10. The method of any of the preceding claims, further comprising storing the carbon dioxide in an underground geologic formation.

11. A system 1000 that uses the method of Claim 1.

12. A system 1000 comprising:
a first compressor (810); the first compressor (810) being operative to compress air;
a turbine (420); the turbine (420) being disposed downstream of the first compressor (810); the turbine (420) being operative to combust a hydrocarbon fuel along with compressed air from the first compressor (810) to produce an exhaust gas stream; and
a second compressor (410); the second compressor (410) being disposed downstream of the turbine (420); the second compressor (410) being operative to compress the exhaust gas stream and to recycle the compressed exhaust gas stream to the turbine (420).

13. The system of claim 12, further comprising a combustion system (430); the combustion system (430) being operative to combust the compressed air and the hydrocarbon fuel.

14. The system of claim 12 or 13, further comprising a carbon dioxide separation system (460); the carbon dioxide separation system (460) being effect to extract carbon dioxide from the exhaust stream.

15. The system of any one of claims 12 to 14, further comprising a flow divider (450); the flow divider (450) being operative to divide the exhaust gas stream into a first portion and a second portion; the first portion being discharged to a carbon dioxide separator (460) while the second portion is recirculated to the second compressor (410).
